# EUROPÄISCHE PATENTSCHRIFT

(11) **EP 3 078 177 B1**
(45) Veröffentlichungstag und Bekanntmachung des Hinweises auf die Patenterteilung: **27.11.2019**
(21) Anmeldenummer: 14789566.8
(22) Anmeldetag: 27.10.2014
(51) Int. Cl.: H04L 29/06, H04L 12/70, H04L 29/12, H04L 29/08

(54) **VERFAHREN ZUM ZUGRIFF AUF EINEN DATENSPEICHER EINES CLOUD-COMPUTERSYSTEMS MIT HILFE EINES MODIFIZIERTEN DOMAIN NAME SYSTEMS (DNS)**
METHOD FOR ACCESSING A DATA MEMORY OF A CLOUD COMPUTER SYSTEM USING A MODIFIED DOMAIN NAME SYSTEM (DNS)
PROCÉDÉ D'ACCÈS À UNE MÉMOIRE DE DONNÉES D'UN SYSTÈME INFORMATIQUE EN NUAGE À L'AIDE D'UN SYSTÈME DE NOM DE DOMAINE (DNS) MODIFIÉ

(30) Priorität: 05.12.2013 DE 102013225016
(43) Veröffentlichungstag der Anmeldung: 12.10.2016
(73) Patentinhaber: Bundesdruckerei GmbH, 10969 Berlin (DE)
(72) Erfinder: BYSZIO, Frank, 16348 Wandlitz (DE)
(74) Vertreter: Richardt Patentanwälte PartG mbB
(86) Internationale Anmeldenummer: PCT/EP2014/073006
(87) Internationale Veröffentlichungsnummer: WO 2015/082133

(56) Entgegenhaltungen:
- Karsten: "owncloud -Zugriff per VPN über das Internet Teil I -Die Welt und ich-zugriff-per-vpn-uber-das-in", , 18. Juli 2013 (2013-07-18), XP055165255, Gefunden im Internet: URL:http://www.kussaw.de/2013/owncloud-zug riff-per-vpn-uber-das-internet-teil-i/ [gefunden am 2015-01-27]
- Donnerdrummel: "Die Owncloud 5 Encryption App", , 16. Juli 2013 (2013-07-16), XP055165235, Gefunden im Internet: URL:https://donnerdrummel.wordpress.com/20 13/07/16/die-owncloud-5-encryption-app/ [gefunden am 2015-01-27]
- Anonymous: "HOWTO", , 17. Juli 2013 (2013-07-17), XP055165264, Gefunden im Internet: URL:https://web.archive.org/web/2013071702 5245/http://openvpn.net/index.php/open-sou rce/documentation/howto.html [gefunden am 2015-01-27]
- Michael Gapczynski: "core/dropbox.js at 5b50bc8c0aaa294bc982deea626e6d1d303c1c23 . owncloud/core . GitHub", , 26. Februar 2013 (2013-02-26), XP055165543, Gefunden im Internet: URL:https://github.com/owncloud/core/blob/ 5b50bc8c0aaa294bc982deea626e6d1d303c1c23/a pps/files_external/js/dropbox.js [gefunden am 2015-01-28]
- "OWNCLOUD", , 2. Dezember 2013 (2013-12-02), XP055165564, Gefunden im Internet: URL:http://en.flossmanuals.net/_booki/ownc loud/owncloud.pdf [gefunden am 2015-01-28]

## Beschreibung

Die Erfindung betrifft ein Verfahren zum Zugriff auf einen Datenspeicher eines Cloud-Computersystems sowie ein Computersystem.

Aus dem Stand der Technik ist es bekannt, Daten verschlüsselt in der sogenannten Cloud zu speichern. Beispielsweise werden bei dropbox.com von dem Nutzer in die Cloud hochgeladene Dateien mit AES-256-Bit-Verschlüsselung gespeichert. Nachteilig ist hierbei, dass der entsprechende Schlüssel Dropbox bekannt ist, sodass die Vertraulichkeit der Daten gegenüber Dropbox nicht gewährleistet ist.

Alternativ kann der Nutzer eine Datei, die er in der Cloud speichern möchte, auf seinem Endgerät zunächst verschlüsseln und dann die verschlüsselte Datei von seinem Endgerät in die Cloud hochladen. In diesem Fall ist die Vertraulichkeit der Datei auch gegenüber dem Cloud-Anbieter, wie zum Beispiel Dropbox, gewährleistet, da der Cloud-Anbieter keinen Zugriff auf den Schlüssel des Nutzers hat, welchen dieser für die Verschlüsselung auf seinem Endgerät verwendet hat. Nachteilig hierbei ist allerdings, dass der Nutzer den Schlüssel bei sich führen muss, um über verschiedene Endgeräte die Datei aus der Cloud wieder herunterzuladen und dann auf dem betreffenden Endgerät zu entschlüsseln. Ein weiterer Nachteil hierbei ist, dass der Nutzer einem anderen Nutzer, dem er eine Leseberechtigung auf die Datei einräumen möchte, seinem geheimen Schlüssel für die Entschlüsselung der Datei mitteilen muss, was ein inhärentes Sicherheitsrisiko bedeutet.

Der Erfindung liegt daher die Aufgabe zugrunde, ein verbessertes Verfahren zum Zugriff auf einen Datenspeicher eines Cloud-Computersystems zu schaffen sowie ein entsprechendes Computersystem.

Unter einer "URL" wird hier ein Uniform Ressource Locator verstanden, der eine Ressource, wie zum Beispiel ein Computersystem in einem Netzwerk, insbesondere dem Internet, identifiziert, insbesondere gemäß dem Standard RFC 1738.

Unter einem "Domain Name System" wird hier ein Dienst in einem Netzwerk, insbesondere einem IP-basierten Netzwerk, insbesondere dem Internet, verstanden, der zur Beantwortung von Anfragen zur Namensauflösung dient. Beispielsweise wird von einem Domain Name System der Domainname eines Computers in die dazugehörige IP-Adresse desselben Computers umgewandelt. Diesen Dienst bezeichnet man auch als "Forward Lookup".

Unter einem "Cloud-Computersystem" wird hier ein Computersystem mit einem Datenspeicher verstanden, wobei auf das Computersystem über ein Netzwerk, wie zum Beispiel das Internet, zugegriffen werden kann.

Unter einem "Gateway-Computersystem" wird hier ein Computersystem verstanden, welches über ein Netzwerk ein Speicherkommando oder ein Lesekommando an ein Cloud-Computersystem richten kann, um eine Datei in dem Datenspeicher des Cloud-Computersystems zu speichern oder aus dem Datenspeicher zu lesen.

Unter einem "Endgerät" wird hier ein Computersystem mit einer Netzwerk-Schnittstelle verstanden, insbesondere ein Personalcomputer, Laptop, Notebook, Tablet oder ein anderer mobiler Computer, ein Telekommunikationsgerät, insbesondere ein Mobilfunkgerät, wie zum Beispiel ein Smartphone oder ein anderes netzwerkfähiges Gerät mit einer Nutzerschnittstelle.

Unter einem "Netzwerk" wird hier ein Kommunikationsnetzwerk, insbesondere ein öffentliches Netzwerk, wie zum Beispiel das Internet, verstanden.

Unter einer "Session" wird hier eine temporäre Kommunikationsverbindung, das heißt eine sog. Communication Session, verstanden, die sich gemäß OSI-Schichtmodell auf die Transportschicht ("transport layer") oder die Anwendungsschicht ("application layer") beziehen kann. Insbesondere kann es sich bei einer Session um eine http-Session oder um eine https-Session handeln, wobei bei letzterer der Transportlayer durch eine symmetrische Verschlüsselung geschützt ist.

Unter einem "Datei-Verzeichnis" wird hier eine Verzeichnisstruktur, Ordnerstruktur oder ein Verzeichnisbaum verstanden, das Dateipfade zu gespeicherten Dateien angibt und eine Auswahl eines Dateipfads für eine zu speichernde Datei ermöglicht.

Unter einem "VPN" wird hier ein Virtual Private Network verstanden, welches zum Beispiel über ein öffentliches Netzwerk, wie zum Beispiel das Internet, aufgebaut werden kann. Typischerweise setzt die Verbindung des Endgeräts mit dem VPN eine Authentifizierung des Nutzers und/oder des Endgeräts gegenüber dem VPN voraus. Insbesondere kann eine Verbindung des Endgeräts zu einem VPN durch ein sogenanntes VPN on demand erfolgen, welches beispielsweise in dem Apple-Betriebssystem iOS unterstützt wird, vgl. "Implementierung von iPhone und iPad, Virtuelle private Netzwerke (VPN)", Apple Inc., 2012, oder durch Starten einer entsprechenden App zum Beispiel auf einem Android-Betriebssystem.

Unter einem "DNS" wird hier ein Domain Name Server verstanden, der in einem TCP/IP-Netzwerk, beispielsweise also dem Internet, die Funktion der Namensauflösung hat, das heißt der Zuordnung einer IP-Adresse zu einer URL, d.h. den sogenannten Forward Lookup.

Unter einem "APN" wird hier ein Access Point Name verstanden, das heißt ein Zugangspunkt eines Mobilfunkgeräts, wie zum Beispiel eines Smartphones, zu einem Mobilfunknetz. Typischerweise ist ein solcher APN in einem Mobilfunkgerät voreingestellt.

Nach einer Ausführungsform der Erfindung wird eine Datei von einem Nutzer wie folgt in dem Cloud-Computersystem gespeichert:
- Zunächst wird eine geschützte Verbindung zwischen einem Endgerät des Nutzers und einem Gateway-Computersystem aufgebaut. Je nach Ausführungsform kann dies nach dem https-Protokoll, über ein VPN oder ein anderes Protokoll erfolgen.
- Der Nutzer überträgt dann eine Datei von einem Endgerät an das Gateway-Computersystem über die geschützte Verbindung, um diese Datei auf das Cloud-Computersystem hochzuladen.
- Das Gateway-Computersystem baut dann eine Session mit dem Cloud-Computersystem auf.
- Vorzugsweise authentifiziert das Gateway-Computersystem den Nutzer gegenüber dem Cloud-Computersystem, indem das Gateway-Computersystem auf in dem Gateway-Computersystem gespeicherte Authentifizierungsdaten des Nutzers zugreift, wie zum Beispiel eine Username/Passwort-Kombination und diese zur Authentifizierung gegenüber dem Cloud-Computersystem verwendet.
- Das Gateway-Computersystem verschlüsselt dann die Datei mit einem Schlüssel. Dieser Schlüssel kann nutzerspezifisch sein und wird von dem Gateway-Computersystem gespeichert. Bei dem Schlüssel kann es sich um einen symmetrischen Schlüssel für die Ver- und Entschlüsselung der Datei handeln oder auch um ein kryptografisches asymmetrisches Schlüsselpaar, wobei in diesem Fall der öffentliche Schlüssel für die Verschlüsselung und der private Schlüssel für die Entschlüsselung von dem Gateway-Computersystem verwendet wird. Ferner ist auch eine hybride Verschlüsselung der Datei unter Verwendung von sowohl einen symmetrischen als auch einem asymmetrischen Schlüsselpaar möglich. Für die von dem Endgerät des Nutzers empfangene Datei generiert das Gateway-Computersystem in diesem Fall einen dateispezifischen symmetrischen Schlüssel. Mit diesem dateispezifischen symmetrischen Schlüssel wird die Datei verschlüsselt. Dem Nutzer ist ein asymmetrisches Schlüsselpaar zugeordnet, d.h. ein privater Schlüssel des Nutzers mit dem dazugehörigen öffentlichen Schlüssel des Nutzers. Der dateispezifische symmetrische Schlüssel, mit dem die Datei verschlüsselt ist, wird nun seinerseits mit dem öffentlichen Schlüssel des Nutzers verschlüsselt. Der unverschlüsselte dateispezifische symmetrische Schlüssel kann dann von dem Gateway-Computersystem gelöscht werden und braucht dort nicht permanent gespeichert zu werden.
- Die verschlüsselte Datei wird von dem Gateway-Computersystem über die Session an das Cloud-Computersystem übertragen und dort gespeichert. Im dem o.g. Fall einer hybriden Verschlüsselung wird zusätzlich der mit dem öffentlichen Schlüssel des Nutzers verschlüsselte dateispezifische symmetrische Schlüssel über die Session an das Cloud-Computersystem übertragen und dort gespeichert, wobei hierbei eine Zuordnung zu der verschlüsselten Datei erfolgt, um zu einem späteren Zeitpunkt die verschlüsselte Datei und den dazugehörigen verschlüsselten dateispezifischen Schlüssel lesen zu können.

Zum Aufbau der geschützten Verbindung zwischen dem Endgerät des Nutzers und dem Gateway-Computersystem wird so vorgegangen, dass die URL nicht des Gateway-Computersystems, sondern des Cloud-Computersystems in ein Programm des Endgeräts eingegeben wird. Bei dem Programm kann es sich um einen üblichen Internetbrowser oder um ein spezielles Anwendungsprogramm, das heißt eine sogenannte App, des Endgeräts handeln.

Dieses Programm ist dazu ausgebildet, die geschützte Verbindung als Internet-Session, wie zum Beispiel als https-Session, aufzubauen. Die hierzu erforderliche Namensauflösung wird mithilfe eines modifizierten Domain Name Systems durchgeführt, durch welches nämlich die in der URL des Cloud-Computersystems beinhaltete Domain der IP-Adresse des Gateway-Computersystems zugeordnet wird. Die Anforderung des Programms zur Namensauflösung der URL des Cloud-Computersystems liefert also als Antwort des Domain Name Systems die IP-Adresse des Gateway-Computersystems, sodass also die geschützte Verbindung tatsächlich mit dem Gateway-Computersystem und nicht unmittelbar mit dem Cloud-Computersystem aufgebaut wird, obwohl die URL des Cloud-Computersystems in das Programm eingegeben worden ist.

Dies hat den besonderen Vorteil, dass der Benutzer wie gewohnt die URL des Cloud-Computersystems in das Programm, wie zum Beispiel seinen Internetbrowser, eingeben kann, sodass keine Umgewöhnung des Nutzers oder Neueingabe der URL des Gateway-Computersystems in das Programm oder auch nur deren Kenntnis erforderlich ist.

Ausführungsformen der Erfindung sind besonders vorteilhaft, da einerseits die Datei verschlüsselt in dem Cloud-Computersystem gespeichert ist, ohne dass das Cloud-Computersystem Zugriff auf den Schlüssel des Nutzers zur Entschlüsselung der Datei hat, und andererseits der Nutzer unabhängig von dem jeweils verwendeten Endgerät über das Gateway auf seine in dem Cloud-Computersystem gespeicherten Dateien zugreifen kann, da der oder die hierfür erforderlichen Schlüssel nicht auf dem jeweils verwendeten Endgerät vorhanden sein müssen. Hierdurch wird ein höchstes Maß an Flexibilität, Bequemlichkeit und Sicherheit für die Speicherung von Dateien in der Cloud zur Verfügung gestellt.

Nach einer Ausführungsform der Erfindung hat das Cloud-Computersystem ein Datei-Verzeichnis zur Angabe einer Verzeichnisstruktur für die Dateien, die der Nutzer in dem Datenspeicher des Cloud-Computersystems gespeichert hat. Das Gateway-Computersystem hat eine Replik dieses Datei-Verzeichnisses, die anlässlich der Speicherung einer Datei in dem Cloud-Computersystem aktualisiert wird, um hierdurch eine Replikation zu erreichen. Um eine Navigation des Nutzers in der Verzeichnisstruktur des Cloud-Computersystems zu ermöglichen, um nämlich die Datei gezielt an einer bestimmten Stelle abzuspeichern, kann wie folgt vorgegangen werden:
- Das Gateway-Computersystem erzeugt eine Webseite mit einer Wiedergabe der Replik des Datei-Verzeichnisses.
- Diese Webseite wird über die geschützte Verbindung an das Endgerät übertragen und zum Beispiel mittels des Internetbrowsers des Endgeräts angezeigt.
- Der Nutzer wählt dann einen Dateipfad anhand des Datei-Verzeichnisses aus, um einen Speicherort für die Datei auszuwählen.
- Dieser von dem Nutzer ausgewählte Speicherort, das heißt der ausgewählte Dateipfad, wird dann über die geschützte Verbindung von dem Endgerät an das Gateway-Computersystem übertragen.
- Das Gateway-Computersystem generiert ein entsprechendes Speicherkommando für das Cloud-Computersystem, um über die Session die Speicherung der verschlüsselten Datei an dem von dem Nutzer zuvor ausgewählten Speicherort in dem Datenspeicher des Cloud-Computersystems vorzunehmen.
- Nach erfolgreicher Speicherung der verschlüsselten Datei antwortet das Cloud-Computersystem mit einem Bestätigungssignal, um die erfolgreiche Speicherung zu signalisieren.
- Das Gateway-Computersystem aktualisiert daraufhin die Replik des Datei-Verzeichnisses, sodass ein Icon für die zuvor gespeicherte Datei in der Replik des Datei-Verzeichnisses erscheint.

Nach einer Ausführungsform der Erfindung wird ein sogenanntes File-Sharing ermöglicht, indem der Nutzer einen Identifikator eines weiteren Nutzers in sein Endgerät eingibt und dieser Identifikator über die geschützte Verbindung an das Gateway-Computersystem übertragen wird. Bei diesem Identifikator kann es sich zum Beispiel um eine E-Mail-Adresse des weiteren Nutzers handeln. Für das File-Sharing kann wie folgt vorgegangen werden:
- Der Nutzer spezifiziert ein Zugriffsrecht des weiteren Nutzers auf eine bestimmte Datei oder mehrere Dateien, die für den Nutzer in dem Datenspeicher des Cloud-Computersystems gespeichert sind. Diese Spezifizierung kann mithilfe der Replik des Datei-Verzeichnisses des Gateway-Computersystems erfolgen.
- Das Gateway-Computersystem speichert die Spezifizierung des Zugriffsrechts für den weiteren Nutzer zusammen mit dem Identifikator des weiteren Nutzers. Beispielsweise kann die Spezifizierung des Zugriffsrechts auch einer zeitlichen Beschränkung unterliegen.
- Das Gateway-Computersystem erzeugt eine Nachricht, wie zum Beispiel eine E-Mail, um den weiteren Nutzer von der Einräumung des Zugriffsrechts zu informieren. Beispielsweise beinhaltet die E-Mail eine URL, die der weitere Nutzer nach Empfang der E-Mail auf seinem Endgerät selektieren kann, zum Beispiel durch Anklicken mit der Computermaus oder durch Antippen auf dem berührungssensitiven Bildschirm seines Smartphones, woraufhin der Internetbrowser des Endgeräts gestartet und eine Antwort auf diese E-Mail an das Gateway-Computersystem von dem Nutzer resultiert. Daraufhin wird eine geschützte Verbindung, wie zum Beispiel eine https-Verbindung oder per VPN on Demand zwischen dem Gateway-Computersystem und dem Endgerät des weiteren Nutzers aufgebaut, über welche der weitere Nutzer im Rahmen des ihm eingeräumten Zugriffsrechts auf die in dem Datenspeicher des Cloud-Computersystems gespeicherten Dateien des Nutzers über das Gateway-Computersystem lesend zugreifen kann.

Im Falle der o.g. Ausführungsform mit einer hybriden Verschlüsselung beinhaltet die Spezifizierung des Zugriffsrechts für den weiteren Nutzer, dass zunächst eine Lesezugriff des Gateway-Computersystems auf das Cloud-Computersystem erfolgt, um den der Datei, für welche das Zugriffsrecht eingeräumt werden soll, zugeordneten mit dem öffentlichen Schlüssel des Nutzers verschlüsselten dateispezifischen symmetrischen Schlüssel zu lesen. Dieser verschlüsselte dateispezifische symmetrische Schlüssel wird dann durch das Gateway-Computersystem mit Hilfe des privaten Schlüssels des Nutzers, der das Zugriffsrecht dem weiteren Nutzer einräumen möchte, entschlüsselt. Dieser entschlüsselte dateispezifische symmetrische Schlüssel wird anschließend mit dem öffentlichen Schlüssel des weiteren Nutzers, dem ebenfalls ein asymmetrischen kryptographisches Schlüsselpaar zugeordnet ist, verschlüsselt und das sich aus dieser Verschlüsselung ergebende Chiffrat wird von dem Gateway-Computersystems in dem Cloud-Computersystem gespeichert und zwar so, dass das Chiffrat ebenfalls der Datei zugeordnet ist. Auf diese Art und Weise wird dem weiteren Nutzer ein Lesezugriff auf die Datei ermöglicht.

Nach einer Ausführungsform der Erfindung erfolgt der Aufbau der geschützten Verbindung zum Hochladen der Datei von dem Endgerät automatisch mit dem Gateway-Computersystem und nicht mit dem Cloud-Computersystem, obwohl der Nutzer beispielsweise die URL des Cloud-Computersystems in seinen Internetbrowser eingegeben hat.

Nach einer Ausführungsform der Erfindung ist dies so implementiert, dass der DNS, der in dem Betriebssystem des Endgeräts des Nutzers festgelegt ist, den Namen des Cloud-Computersystems, das heißt dessen URL, nicht in die IP-Adresse des Cloud-Computersystems, sondern in die IP-Adresse des Gateway-Computersystems auflöst. Dementsprechend wird die geschützte Verbindung nicht mit dem Cloud-Computersystem, sondern mit dem Gateway-Computersystem aufgebaut. Dies hat für den Nutzer den Vorteil, dass er wie gewohnt zum Beispiel www.dropbox.com in seinen Internetbrowser eingeben kann, weil er auf diese Art und Weise automatisch mit dem Gateway-Computersystem konnektiert wird, ohne die URL des Gateway-Computersystems kennen oder eingeben zu müssen.

In analoger Art und Weise kann eine APN eines Mobilfunknetzes dafür verwendet werden, die gesicherte Verbindung mit dem Gateway-Computersystem und nicht mit dem Cloud-Computersystem aufzubauen.

Nach einer Ausführungsform der Erfindung ist auf dem Endgerät eine Zuordnungs-Datei gespeichert, die eine Zuordnung der Domain, die in der URL des Cloud-Computersystems beinhaltet ist, zu der IP-Adresse des Gateway-Computersystems beinhaltet. Das Betriebssystem des Endgeräts ist so ausgebildet, dass eine Anforderung des Programms zur Namensauflösung einer URL so verarbeitet wird, dass das Betriebssystem zunächst auf die Zuordnungs-Datei zugreift, um zu prüfen, ob für die betreffende URL eine Zuordnung zu einer IP-Adresse dort gespeichert ist. Ist dies der Fall, so antwortet das Betriebssystem auf die Anforderung des Programms mit dieser IP-Adresse der Zuordnungs-Datei. Wenn hingegen ein entsprechender Eintrag in der Zuordnungs-Datei nicht vorhanden ist, so leitet das Betriebssystem die Anforderung des Programms an einen DNS weiter. Dieser DNS kann in dem Betriebssystem des Endgeräts festgelegt sein.
Für die Modifizierung des Domain Name Systems kann also so vorgegangen werden, dass die Zuordnung der Domain der URL des Cloud-Computersystems zu der IP-Adresse des Gateway-Computersystems in der Zuordnungs-Datei des Endgeräts gespeichert ist. Alternativ kann die Modifizierung des Domain Name Systems dadurch erfolgen, dass diese Zuordnung nicht in der Zuordnungs-Datei, sondern auf der Ebene des DNS gespeichert ist, wobei dieser DNS in dem Betriebssystem des Endgeräts festgelegt sein kann, beispielsweise indem die IP-Adresse von diesem vorbestimmten DNS in einer Datei des Betriebssystems gespeichert ist.

Ausführungsformen der Erfindung sind besonders vorteilhaft, da die Speicherung der Zuordnung in der Zuordnungs-Datei eine individuelle Zuordnung auf der Ebene der einzelnen Endgeräte ermöglicht. Dagegen kann global für mehrere solcher Endgeräte diese Zuordnung über den Verweis auf einen vorbestimmten DNS festgelegt sein, in dem diese Zuordnung gespeichert ist. Ferner ist es möglich, bei einer globalen Festlegung durch Speicherung in dem DNS von dieser globalen Festlegung auf der Ebene des Endgeräts dadurch abzuweichen, dass in der Zuordnungs-Datei eine andere Zuordnung als in dem DNS gespeichert ist, wenn beispielsweise der Nutzer ein anderes Gateway-Computersystem und/oder ein anderes Cloud-Computersystem wünscht als dies für die anderen Endgeräte vorgesehen ist.

Im Weiteren werden Ausführungsformen der Erfindung mit Bezugnahme auf die Zeichnungen näher erläutert.

Es zeigen:
- Figur 1: ein Blockdiagramm einer Ausführungsform eines erfindungsgemäßen Computersystems,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens,
- Figur 4: ein Blockdiagramm einer weiteren Ausführungsform eines erfindungsgemäßen Computersystems.

Elemente der nachfolgenden Ausführungsformen, die einander entsprechen oder gleichen, werden jeweils mit identischen Bezugszeichen gekennzeichnet.

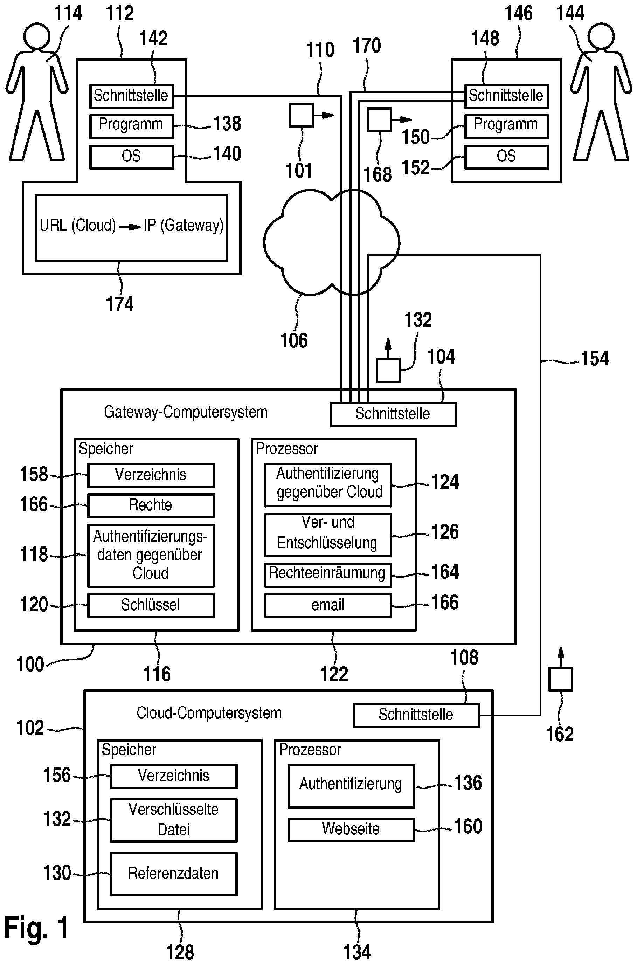

Die Figur 1 zeigt ein Computersystem, das ein Gateway-Computersystem 100 und ein Cloud-Computersystem 102 beinhaltet. Das Gateway-Computersystem 100 hat eine Schnittstelle 104 zur Kopplung mit einem Netzwerk 106, wobei es sich bei dem Netzwerk 106 beispielsweise um das Internet handelt. Das Cloud-Computersystem 102 hat ebenfalls eine Schnittstelle 108 zur Kopplung mit dem Netzwerk 106, sodass eine Session zwischen dem Gateway-Computersystem 100 und dem Cloud-Computersystem 102 aufbaubar ist.

Die Schnittstelle 104 des Gateway-Computersystems 100 kann auch dazu dienen, eine geschützte Verbindung 110 mit einem Endgerät 112 eines Nutzers 114 aufzubauen. Beispielsweise erfolgt der Aufbau der geschützten Verbindung 110 ebenfalls über das Netzwerk 106. Beispielsweise handelt es sich bei der geschützte Verbindung 110 um eine https-Session oder die geschützte Verbindung 110 wird über ein VPN, welches das Endgerät 112 und das Gateway-Computersystem 100 beinhaltet, aufgebaut.

Das Gateway-Computersystem 100 hat einen elektronischen Speicher 116, in dem die Authentifizierungsdaten von registrierten Nutzern gespeichert sind, insbesondere die Authentifizierungsdaten 118 des Nutzers 114. Diese Authentifizierungsdaten 118 dienen zur Authentifizierung des Nutzers 114 gegenüber dem Cloud-Computersystem 112. Die Authentifizierungsdaten können zum Beispiel einen Nutzernamen/Passwort-Kombination beinhalten.

Ferner dient der Speicher 116 zur Speicherung von zumindest einem kryptografischen Schlüssel für jeden registrierten Nutzer, insbesondere zur Speicherung des symmetrischen Schlüssels 120 für den Nutzer 114. Anstelle eines symmetrischen Schlüssels kann auch ein asymmetrisches kryptografisches Schlüsselpaar für einen registrierten Nutzer in dem Speicher 116 gespeichert sein.

Das Gateway-Computersystem 100 hat zumindest einen Mikroprozessor 122 zur Ausführung eines Programmmoduls 124, welches zur Authentifizierung eines registrierten Nutzers gegenüber dem Cloud-Computersystem 102 dient sowie zur Ausführung eines Programmmoduls 126 zur Ver- und Entschlüsselung von Dateien mithilfe der in dem Speicher 116 für den jeweiligen Nutzer gespeicherten Schlüssel, insbesondere mithilfe des Schlüssels 120 des Nutzers 114.

Das Cloud-Computersystem 102 hat einen elektronischen Speicher 128, in dem Referenzdaten für die Authentifizierung der registrierten Nutzer gespeichert sind, insbesondere die Referenzdaten 130 für den Nutzer 114. Ferner sind in dem Speicher 128 verschlüsselte Dateien der registrierten Nutzer gespeichert sind, insbesondere die verschlüsselte Datei 132, die dort für den Nutzer 114 abgespeichert ist.

Das Cloud-Computersystem 102 beinhaltet zumindest einen Mikroprozessor 134 zur Ausführung eines Programmmoduls 136 für die Authentifizierung der registrierten Nutzer. Bei dem Cloud-Computersystem 102 kann es sich um ein aus dem Stand der Technik an sich bekanntes Cloud-Computersystem handeln, wie zum Beispiel dropbox.com. Bei einem solchen Cloud-Computersystem 102 wird üblicherweise unmittelbar zwischen dem Endgerät des Nutzers und dem Cloud-Computersystem 102 eine Internetverbindung aufgebaut, über die sich der Nutzer gegenüber dem Cloud-Computersystem authentifiziert, um dann anschließend Dateien in das Cloud-Computersystem hochladen zu können oder zuvor gespeicherte Dateien herunterladen zu können.

Im Gegensatz zu dieser aus dem Stand der Technik an sich bekannten Vorgehensweise wird erfindungsgemäß so vorgegangen, dass sich nicht der registrierte Nutzer selbst, sondern in dessen Vertretung das Gateway-Computersystem 100 für diesen Nutzer gegenüber dem Cloud-Computersystem authentifiziert und zwar mit Hilfe der Authentifizierungsdaten 118. Dies hat insbesondere den Vorteil, dass für die Implementierung der Erfindung auf existente Cloud-Computersysteme zugegriffen werden kann, ohne dass diese zwingend einer Veränderung bedürften.

Bei dem Endgerät 112 des Nutzers 114 kann es sich um ein stationäres oder mobiles Computersystem, insbesondere ein Telekommunikationsgerät, wie zum Beispiel ein Smartphone, handeln. Das Endgerät 112 dient zur Ausführung eines Programmmoduls 138, bei dem es sich zum Beispiel um einen Internetbrowser oder ein Anwendungsprogramm, wie zum Beispiel eine sogenannte App, handeln kann.

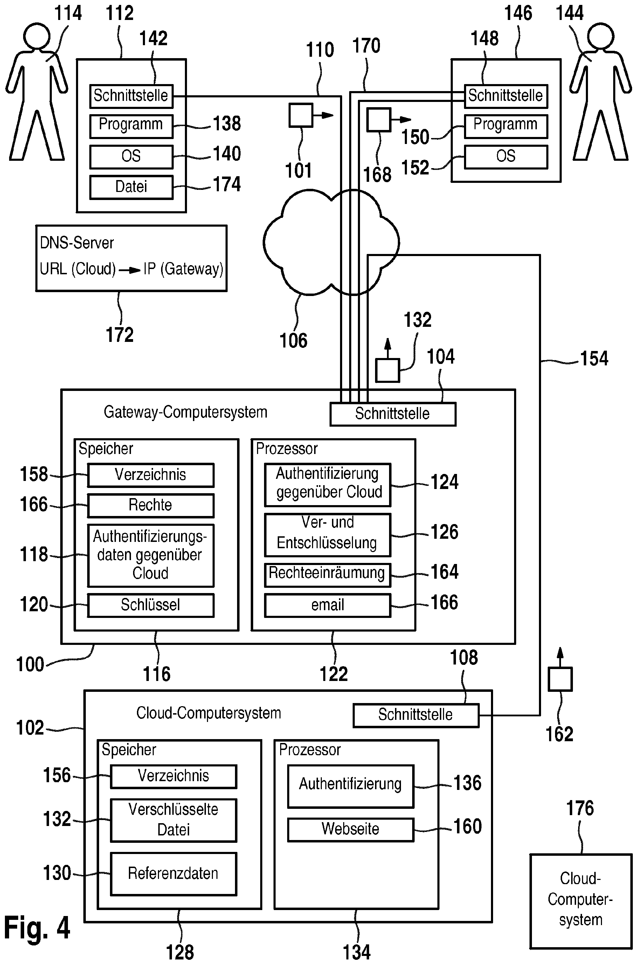

Das Endgerät 112 hat ferner ein Betriebssystem, das heißt ein Operating System, 140, wie zum Beispiel Windows, iOS oder Android, sowie eine Schnittstelle 142 zum Aufbau der geschützten Verbindung 110 mit dem Gateway-Computersystem 100. Bei dem Nutzer 114 handelt es sich um einen registrierten Nutzer, der in dem Gateway-Computersystem 100 und in dem Cloud-Computersystem 102 registriert ist. In dem Endgerät 112 ist eine Zuordnungs-Datei 174 gespeichert, in der eine Zuordnung der in der URL des Cloud-Computersystems beinhalteten Domain zu der IP-Adresse des Gateway-Computersystems 100 festgelegt ist. Das Betriebssystem 140 des Endgeräts 112 ist so ausgebildet, dass eine Anforderung des Programms 138 für eine Namensauflösung durch das Betriebssystem 140 so verarbeitet wird, dass zunächst durch das Betriebssystem 140 auf die Zuordnungs-Datei 174 zugegriffen wird, um zu prüfen, ob eine Zuordnung der betreffenden Domain zu einer IP-Adresse in der Zuordnungs-Datei 174 gespeichert ist. Wenn dies der Fall ist, so antwortet das Betriebssystem 140 auf die Anforderung des Programms 138 mit dieser in der Zuordnungs-Datei 174 gespeicherten IP-Adresse. Ist ein solcher Eintrag in der Zuordnungs-Datei 174 hingegen nicht vorhanden, so leitet das Betriebssystem 140 die Anforderung des Programms 138 an einen DNS weiter (vergleiche DNS 172 der Ausführungsform gemäß Figur 4).

Im vorliegenden Fall ist das Endgerät 112 so konfiguriert, dass der Domain, die in der URL des Cloud-Computersystems 102 beinhaltet ist, die IP-Adresse des Gateway-Computersystems 100 in der Zuordnungs-Datei 174 zugeordnet ist.

Bei einem weiteren Nutzer 144 handelt es sich nicht notwendigerweise um einen registrierten Nutzer; der Nutzer 144 hat ein Endgerät 146, bei dem es sich um einen stationären oder mobilen Computer, ein Telekommunikationsgerät, wie zum Beispiel ein Mobilfunkgerät, insbesondere ein Smartphone, handeln kann. Das Endgerät 146 hat eine Schnittstelle 148 zur Verbindung mit dem Netzwerk 106, ein Programmmodul 150 zum Empfang einer Nachricht, wie zum Beispiel einer E-Mail, und ein Betriebssystem 152.

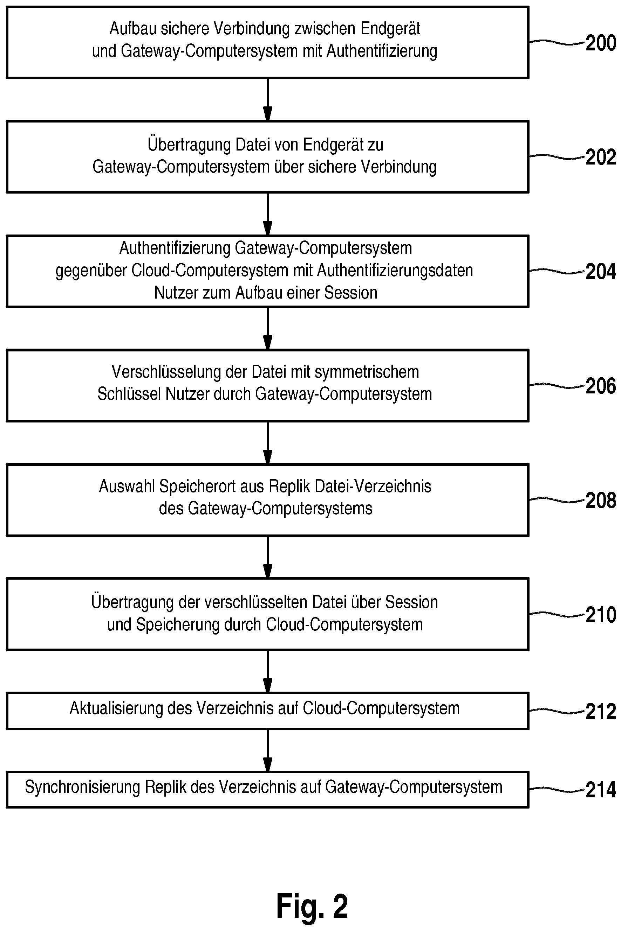

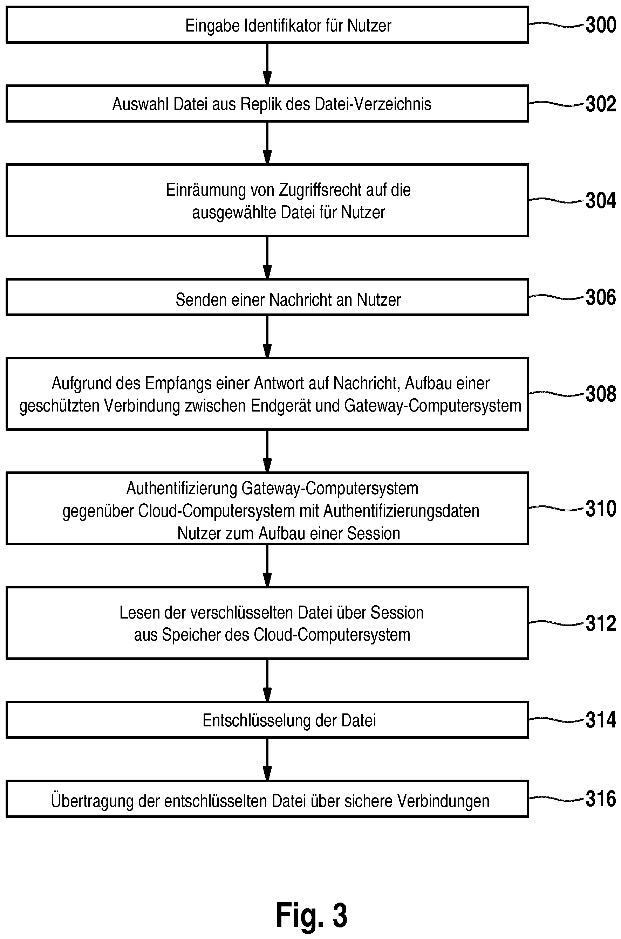

Der Betrieb des Computersystems gemäß Figur 1 wird anhand der Flussdiagramme gemäß Figuren 2 und 3 unten stehend näher erläutert:
In dem Schritt 200 wird die sichere Verbindung 110 zwischen dem Endgerät 112 des Nutzers 114 und dem Gateway-Computersystem 100 aufgebaut. Je nach Ausführungsform kann dies die Authentifizierung des Nutzers 114 und/oder des Endgeräts 112 gegenüber dem Gateway-Computersystem 100 erforderlich machen. Falls die geschützte Verbindung 110 über ein VPN zustande kommt, muss sich der Nutzer 114 beispielsweise zur Einwahl in das VPN mithilfe eines One Time Passwords (OTP) authentifizieren. Eine andere Möglichkeit ist der Aufbau der geschützten Verbindung 110 durch ein sogenanntes VPN on Demand.

Alternativ kann der Aufbau der geschützten Verbindung 110 nach dem https-Protokoll erfolgen, beispielsweise indem der Nutzer 112 ein URL des Gateway-Computersystems 100 zum Aufbau einer solchen https-Verbindung in das Programmmodul 138 eingibt oder indem der Nutzer 114 durch einen sogenannten Redirect auf eine solche URL des Gateway-Computersystems 100 weitergeleitet wird, um die geschützte Verbindung 110 aufzubauen.

Zum Aufbau der sicheren Verbindung 110 wird beispielsweise so vorgegangen, dass der Nutzer 114 die URL des Cloud-Computersystems 102 in das Programm 138 eingibt, insbesondere dann, wenn es sich bei dem Programm 138 um einen Internetbrowser handelt, oder dass der Nutzer 114 lediglich das Programm 138 startet, insbesondere dann wenn es sich um eine spezielle App handelt, die bereits die URL des Cloud-Computersystems 102 beinhaltet, sodass der Nutzer 114 die URL nicht explizit eingeben muss.

Das Programm 138 generiert dann eine Anforderung zur Namensauflösung der URL des Cloud-Computersystems 102. Diese Anforderung wird von dem Betriebssystem 140 so verarbeitet, dass dieses auf die Datei 174 zugreift. Da dort eine Zuordnung für die URL des Cloud-Computersystems 102, das heißt die darin beinhaltete Domain, gespeichert ist, antwortet das Betriebssystem 140 dem Programm 138 mit der IP-Adresse des Gateway-Computersystems 100, sodass dann die Verbindung 110 zwischen dem Endgerät 112 und dem Gateway-Computersystem 100 aufgebaut wird.
In dem Schritt 202 wird eine Datei 101 von dem Endgerät 112 zu dem Gateway-Computersystem 100 über die sichere Verbindung 110 übertragen. Bei der Datei 101 kann es sich zum Beispiel um ein Foto handeln, das der Nutzer 114 mithilfe seines Endgeräts 112 aufgenommen hat, eine Worddatei, eine Exceldatei oder eine andere Datei mit privatem oder geschäftlichem Inhalt des Nutzers 114.

Die Übertragung dieser Datei 101 über die geschützte Verbindung 110 kann unverschlüsselt erfolgen, da aufgrund der geschützten Verbindung 110 für hinreichende Sicherheit gegen Ausspähen oder Manipulation der Datei 101 auf dem Übertragungsweg von dem Endgerät 112 zu dem Gateway-Computersystem 100 gesorgt ist, d.h. die Datei muss vor der Übertragung über die Verbindung 110 nicht zwangsläufig verschlüsselt werden, da die Verbindung 110 selbst z.B. auf dem transport layer verschlüsselt ist. Dies hat den Vorteil, dass auf dem Endgerät 112 keine besondere Verschlüsselungssoftware und kein kryptografischer Schlüssel vorhandeln sein muss, abgesehen von z.B. einen Session Key für die Verbindung 110.

In dem Schritt 204 baut das Gateway-Computersystem 100 aufgrund des Empfangs der Datei 101 von dem Endgerät 112 eine Session 154 mit dem Cloud-Computersystem 102 auf, wie zum Beispiel eine Internet-Session, wenn es sich bei dem Netzwerk 106 um das Internet handelt.

Über diese Session 154 authentifiziert das Gateway-Computersystem 100 den Nutzer 114, indem es auf die Authentifizierungsdaten 118 zugreift. Wenn es sich bei den Authentifizierungsdaten 118 zum Beispiel um eine Nutzername-/Passwort-Kombination handelt, so werden diese Authentifizierungsdaten über die Session 154 an das Cloud-Computersystem 102 übertragen und von dem Cloud-Computersystem 102 auf Übereinstimmung mit den dort gespeicherten Referenzdaten geprüft. Wenn eine solche Übereinstimmung vorliegt, antwortet das Cloud-Computersystem 102 auf die Authentifizierungsdaten 118 mit einem Bestätigungssignal, über die Session 154, um dem Gateway-Computersystem 100 die erfolgreiche Authentifizierung zu signalisieren.

Das Gateway-Computersystem 100 greift in dem Schritt 206 auf den Schlüssel 120 zu, wobei hier ohne Beschränkung der Allgemeinheit davon ausgegangen wird, dass es sich um einen symmetrischen Schlüssel handelt, der dem Nutzer 114 zugeordnet ist. Mit dem Schlüssel 120 verschlüsselt das Gateway-Computersystem 100 die zuvor von dem Endgerät 112 des Nutzers 114 empfangene Datei 101. In dem Schritt 212 wird die resultierende verschlüsselte Datei 132 über die Session 154 von dem Gateway-Computersystem 100 an das Cloud-Computersystem 102 übertragen und von dem Cloud-Computersystem 102 in dem Speicher 128 gespeichert. Daraufhin sendet das Cloud-Computersystem 102 über die Session 154 ein Bestätigungssignal 162, um die erfolgreiche Speicherung zu signalisieren.

Im Falle der oben genannten Ausführungsform mit hybrider Verschlüsselung ist der Schlüssel 120 nicht nutzerspezifisch, sondern dateispezifisch. Aufgrund des Empfangs der Datei 101 erzeugt das Gateway-Computersystem 100 für diese Datei 101 einen dateispezifischen symmetrischen Schlüssel 120. Hierzu hat das Gateway-Computersystem 100 einen entsprechenden Schlüsselgenerator zur Erzeugung des dateispezifischen symmetrischen Schlüssels 120. Mithilfe dieses dateispezifischen symmetrischen Schlüssels 120 verschlüsselt das Gateway-Computersystem 100 die Datei 101.

Für den Nutzer 114 sowie auch für den weiteren Nutzer 144 sind bei der hier betrachteten Ausführungsform mit hybrider Verschlüsselung jeweils asymmetrische kryptografische Schlüsselpaare vorhanden, auf die das Gateway-Computersystem 100 Zugriff hat, wobei die jeweiligen asymmetrischen kryptografischen Schlüsselpaare beispielsweise in dem Speicher 116 gespeichert sind oder auf Chipkarten der Nutzer 114 und 146, wie z.B. auf einer SIM Karte des jeweiligen Endgeräts 112 bzw. 146, oder auf dem jeweiligen elektronischen Personalausweis der Nutzer 114, 146.

Das Gateway-Computersystem 100 verschlüsselt nun den dateispezifischen symmetrischen Schlüssel 120 mithilfe des öffentlichen Schlüssels des Nutzers 114, sodass ein erstes Chiffrat resultiert. Der dateispezifische symmetrische Schlüssel 120 wird anschließend von dem Gateway-Computersystem 100 aus dessen Speicher 116 gelöscht. In dem Schritt 212 werden bei der hier betrachteten Ausführungsform mit hybrider Verschlüsselung die resultierende verschlüsselte Datei 132 und das zugeordnete erste Chiffrat über die Session 154 von dem Gateway-Computersystem 100 an das Cloud-Computersystem 102 übertragen und von dem Cloud-Computersystem 102 in den Speicher 128 gespeichert. Dies hat insbesondere den Vorteil, dass das Gateway-Computersystem nicht permanent eine Kopie des dateispezifischen symmetrischen Schlüssels 120 speichern muss, was einer weiteren Verbesserung des Schutzes der Privatsphäre der Nutzer dienlich ist. Insbesondere kann so vorgegangen werden, dass in dem Speicher 116 des Gateway-Computersystems nur die öffentlichen Schlüssel des Nutzers 114 und des weiteren Nutzers 144 gespeichert werden, nicht aber die entsprechenden privaten Schlüssel, die zum Beispiel auf Chipkarten des Nutzers 114 beziehungsweise des Nutzers 144 gespeichert sind, auf welche die Endgeräte 112 beziehungsweise 146 über entsprechende Schnittstellen zugreifen können.

Das Cloud-Computersystem 102 hat ein Datei-Verzeichnis 154, wie zum Beispiel einen sogenannten File Tree, der verschiedene Dateipfade beinhaltet. In dem Gateway-Computersystem 100 kann eine Replik 158 des Datei-Verzeichnisses 156 gespeichert sein, aus der der Nutzer 114 über die geschützte Verbindung 110 einen Dateipfad für die Speicherung der in dem Schritt 202 übertragenen Datei auswählen kann.

Beispielsweise erfolgt dies so, dass das Cloud-Computersystem 102 nach der Authentifizierung des Nutzers 114 durch das Gateway-Computersystem 100 durch Ausführung eines Programmmoduls 160 durch den Prozessor 134 eine Webseite erzeugt, die zur Wiedergabe des Datei-Verzeichnisses 156 dient. Die entsprechende Information kann als Replik 158 von dem Gateway-Computersystem 100 gespeichert werden. In dem Schritt 208 wählt der Nutzer dann zunächst einen Dateipfad aus dieser Replik 158 des Datei-Verzeichnisses 156 aus, sodass das Gateway-Computersystem dann in dem Schritt 210 ein Speicherkommando zur Speicherung der verschlüsselten Datei 132 an dem durch den Dateipfad spezifizierten Speicherort in dem Speicher 128 erzeugt und über die Session 154 an das Cloud-Computersystem 102 sendet.

In dem Schritt 212 wird das Datei-Verzeichnis 156 durch das Cloud-Computersystem aktualisiert, sodass die verschlüsselte Datei 132 in der aktualisierten Fassung des Datei-Verzeichnisses 156 erscheint. Zur Synchronisierung der Replik 158 mit dem aktualisierten Datei-Verzeichnis 156 kann so vorgegangen werden, dass das Cloud-Computersystem 102 nach der erfolgten Speicherung der verschlüsselten Datei 132 in dem Speicher 128 ein Bestätigungssignal über die Session 154 an das Gateway-Computersystem 100 sendet, um dem Gateway-Computersystem 100 zu signalisieren, dass das Speicherkommando zur Speicherung der verschlüsselten Datei 132 an dem durch den Dateipfad spezifizierten Speicherort erfolgreich durchgeführt worden ist. Dementsprechend kann das Gateway-Computersystem 100 dann die Replik 158 ebenfalls aktualisieren, sodass in der Replik 158 ebenfalls ein Dateipfad mit Angabe des Speicherorts der verschlüsselten Datei 132 erscheint.

Zu einem späteren Zeitpunkt kann der Nutzer 114 wieder auf die verschlüsselte Datei 132 zugreifen. Hierzu wird wiederum die geschützte Verbindung 110 aufgebaut sowie auch die Session 154. Das Gateway-Computersystem 100 authentifiziert den Nutzer 114 dann anhand der Authentifizierungsdaten 118 gegenüber dem Cloud-Computersystem, welches die Authentifizierungsdaten 118 auf Übereinstimmung mit den Referenzdaten 130 prüft. Nach erfolgreicher Authentifizierung des Nutzers 114 gegenüber dem Cloud-Computersystem 102 durch das Gateway-Computersystem 100 kann der Nutzer 114 die verschlüsselte Datei 132 zum Beispiel aus der Replik 158 auswählen, sodass das geschützte Verbindung 110 anschließend ein Lesesignal zum Lesen der verschlüsselten Datei 132 von dem in der Replik 158 angegebenen Speicherort zu erzeugen.

Das Cloud-Computersystem 102 führt dieses Lesekommando durch, indem die verschlüsselte Datei 132 aus dem Speicher 128 ausgelesen und über die Session 154 an das Gateway-Computersystem 100 übertragen wird. Das Gateway-Computersystem 100 greift dann auf den Schlüssel 120 zu, um die verschlüsselte Datei 132 zu entschlüsseln und so die unverschlüsselte Datei 101 zurückzuerhalten. Die unverschlüsselte Datei 101 wird über die Verbindung 110 an das Endgerät 112 des Nutzers 114 übertragen.

Im Falle der Ausführungsform mit hybrider Verschlüsselung wird so vorgegangen, dass sowohl die verschlüsselte Datei 132 als auch das erste Chiffrat aus dem Speicher 128 ausgelesen und über die Session 154 an das Gateway-Computersystem 100 übertragen werden. Das Gateway-Computersystem 100 initiiert dann eine Entschlüsselung des ersten Chiffrats mithilfe des privaten Schlüssels des Nutzers 114.

Wenn der private Schlüssel des Nutzers 114 in dem Speicher 116 des Gateway-Computersystems 100 vorhanden ist, so kann diese Entschlüsselung durch das Gateway-Computersystem 100 selbst erfolgen. Andernfalls sendet das Gateway-Computersystem 100 zum Beispiel über die Verbindung 110 ein Kommando an das Endgerät 112 des Nutzers 114 zur Entschlüsselung des ersten Chiffrats, sodass das Endgerät 112 zum Beispiel ein Chipkartenkommando an eine Chipkarte des Nutzers 114 richtet, auf welche das Endgerät 112 über eine entsprechende Kommunikationsschnittstelle Zugriff hat, sodass die Chipkarte des Nutzers 114 das erste Chiffrat entschlüsselt und den so zurückgewonnenen dateispezifischen symmetrischen Schlüssel 120 über die Verbindung 110 an das Gateway-Computersystem 100 übermittelt wird, welches dann die Entschlüsselung der verschlüsselten Datei 132 mithilfe des so zurückgewonnenen dateispezifischen symmetrischen Schlüssels 120 durchführt.

Für das sogenannte File Sharing mit dem weiteren Nutzer 144 kann der Nutzer 114 wie folgt vorgehen:
Über die Verbindung 110 kann der Nutzer 114 einen Identifikator des Nutzers 144 eingeben, wie zum Beispiel dessen E-Mail-Adresse - Schritt 300. Hierzu hat das Gateway-Computersystem 100 ein Programmmodul 164. Der Nutzer 114 kann für den durch die Identifikator bestimmten Nutzer 144 eine Datei, wie z.B. die Datei 101, auswählen (Schritt 302) und zum Beispiel ein Leserecht auf diese ausgewählte Datei 101, der die verschlüsselte Datei 132 entspricht, spezifizieren oder auch für mehrerer solcher Dateien (Schritt 304). Dieses Leserecht wird als eine Information 166 in den Speicher 116 abgelegt, womit spezifiziert ist, dass der Nutzer 114 über den durch den Identifikator festgelegten Nutzer 144 ein Leserecht zum Beispiel auf die Datei 101 eingeräumt hat.

Durch das Programmmodul 166 erzeugt das Gateway-Computersystem 100 dann eine Nachricht, wie zum Beispiel eine E-Mail 168, die von dem Endgerät 146 des Nutzers 144 empfangen wird - Schritt 306. Die E-Mail 168 beinhaltet beispielsweise einen Link zum Aufbau einer geschützten Verbindung, wie zum Beispiel einer https-Verbindung 170.

Durch Selektierung dieses Links, zum Beispiel durch Anklicken mit der Computermaus, durch den Nutzer 144, wird diese Verbindung 170 aufgebaut (Schritt 308) und das Gateway-Computersystem 100 baut dann wiederum die Session 154 auf, um den Nutzer 114 mithilfe der Authentifizierungsdaten 118 gegenüber dem Cloud-Computersystem 102 zu authentifizieren - Schritt 310.
Von besonderem Vorteil ist dabei, dass für den Nutzer 144 keine Authentifizierung und auch keine Registrierung erforderlich sind. Auf der anderen Seite hat der Nutzer 144 weder auf die Authentifizierungsdaten 118 noch auf den Schlüssel 120 Zugriff.

In dem Schritt 312 sendet das Gateway-Computersystem ein Lesekommando zum Lesen der verschlüsselten Datei 132 an das Cloud-Computersystem 102. Die Spezifizierung dieser zu lesenden Datei 132 kann in den Link, den der Nutzer mit der E-Mail 158 erhalten hat, beinhaltet sein.

In dem Schritt 314 empfängt das Gateway-Computersystem 100 die verschlüsselte Datei 132 und entschlüsselt diese dann mit dem Schlüssel 120. Anschließend wird in dem Schritt 316 die entschlüsselte Datei 132, das heißt die Datei 101, über die Verbindung 170 an das Endgerät 146 übertragen.
Im Fall einer hybriden Verschlüsselung wird für die Einräumung eines Leserechts, zum Beispiel auf die Dateien 101, für den weiteren Nutzer 144, so vorgegangen, dass das Gateway-Computersystem 100 zunächst das erste Chiffrat von dem Cloud-Computersystem 102 liest und das erste Chiffrat mithilfe des privaten Schlüssels des Nutzers 114 entschlüsselt wird. Der so von dem Gateway-Computersystem 100 zurückgewonnene dateispezifische symmetrische Schlüssel 120 wird sodann mithilfe des öffentlichen Schlüssels des weiteren Nutzers 144 verschlüsselt, um so ein zweites Chiffrat zu erhalten. Dieses zweite Chiffrat wird von dem Gateway-Computersystem 100 in dem Cloud-Computersystem 102 so abgespeichert, dass es der verschlüsselten Datei 132 zugeordnet ist. Die temporär von dem Gateway-Computersystem 100 zurückgewonnene Kopie des dateispezifischen symmetrischen Schlüssels 120 wird sodann wieder aus dem Speicher 116 gelöscht.

Bei einem Lesezugriff des weiteren Nutzers empfängt das Gateway-Computersystem 100 dann nicht nur die verschlüsselte Datei 132 in dem Schritt 314, sondern auch das der verschlüsselte Datei 132 zugeordnete zweite Chiffrat. Das zweite Chiffrat wird dann mithilfe des privaten Schlüssels des weiteren Nutzers 144 entschlüsselt, sodass das Gateway-Computersystem 100 wiederum eine temporäre Kopie des dateispezifischen symmetrischen Schlüssels 120 zurückgewinnt, mithilfe dessen das Gateway-Computersystem 100 dann die verschlüsselte Datei 132 entschlüsselt. Die Entschlüsselung des zweiten Chiffrats kann - je nach Ausführungsform - entweder wiederum unmittelbar durch das Gateway-Computersystem 100 erfolgen, was voraussetzt, dass in dem Speicher 116 der private Schlüssel des weiteren Nutzers 144 vorhanden ist, oder indem das zweite Chiffrat zum Beispiel über die Verbindung 170 von dem Gateway-Computersystem 100 an das Endgerät 146 zur Entschlüsselung übermittelt wird. In letzterem Fall antwortet das Endgerät 146 mit dem entschlüsselten zweiten Chiffrat, das heißt dem dateispezifischen symmetrischen Schlüssel 120, der nach der Entschlüsselung der Datei 132 von dem Gateway-Computersystem 100 wiederum aus dessen Speicher 116 gelöscht wird.

Die Figur 4 zeigt eine Ausführungsform des Computersystems, wobei die Kommunikation zwischen den Systemkomponenten, das heißt dem Gateway-Computersystem 100, dem Cloud-Computersystem 102 sowie den Endgeräten 112 und 146 über das Netzwerk 106 nach dem TCP/IP-Protokoll erfolgt und sogenannte DNS für die sogenannte Namensauflösung verwendet werden.

Durch einen DNS erfolgt, wie im Stand der Technik an sich bekannt, die Zuordnung eines Domain-Namens, das heißt einer URL, zu einer entsprechenden IP-Adresse, die zum Aufbau einer Verbindung mit dem durch die URL spezifizierten Teilnehmer gemäß dem TCP/IP-Protokoll erforderlich ist.

Nach Ausführungsformen der Erfindung ist in dem Betriebssystem 140 einer dieser DNS, nämlich der DNS 172, angegeben. Durch den DNS 172 wird die URL des Cloud-Computersystems 102 nicht der IP-Adresse des Cloud-Computersystems 102, sondern der IP-Adresse des Gateway-Computersystems 100 zugeordnet. Erfolgt also der Aufbau der geschützten Verbindung 110 anhand der URL des Cloud-Computersystems 102, so wird von dem Endgerät 112 über das Netzwerk 106 eine Anforderung für eine Namensauflösung der URL des Cloud-Computersystems 102 den in dem Betriebssystem 140 spezifizierten DNS 172 gerichtet, der dann nicht mit der IP-Adresse des Cloud-Computersystems 102, sondern mit der IP-Adresse des Gateway-Computersystems 100 antwortet, sodass dementsprechend die Verbindung 110 tatsächlich mit dem Gateway-Computersystem 100 und nicht mit dem Cloud-Computersystem 102 aufgebaut wird. Dies hat den Vorteil, dass der Nutzer 114 nicht die URL des Gateway-Computersystems 100 kennen muss, sondern lediglich - wie gewohnt - mit der URL des Cloud-Computersystems 102 arbeiten kann. Beispielsweise kann der Nutzer 114 die URL von dropbox.com in das Programmmodul 138, beispielsweise den Internetbrowser seines Endgeräts 112, eingeben, woraufhin dann die Verbindung 110 mit dem Gateway-Computersystem 100 automatisch aufgebaut wird.

In analoger Art und Weise kann vorgegangen werden, wenn die Verbindung 110 als Mobilfunkverbindung aufgebaut wird. In diesem Fall kann ein APN des Mobilfunknetzwerks die Funktion des DNSs 172 erfüllen.

Wie in der Ausführungsform gemäß Figur 1 kann auch in der Ausführungsform gemäß Figur 4 auf dem Endgerät 112 eine Zuordnungs-Datei 174 gespeichert sein, die gemäß der hier betrachteten Ausführungsform gemäß Figur 4 entweder keine Zuordnung der Domain der URL des Cloud-Computersystems 102 beinhaltet, so dass dann die Namensauflösung durch den DNS 172 erfolgt, oder eine andere Zuordnung einer Domain eines alternativen Cloud-Computersystems 176 zu dem Gateway-Computersystem 100 oder einem alternativen Gateway-Computersystem 100 aufweist.

Das alternative Cloud-Computersystem 176 kann im Prinzip gleich oder ähnlich aufgebaut sein wie das Cloud-Computersystem 102. Es wird aber von einem anderen Anbieter betrieben und hat auch eine andere IP-Adresse als das Cloud-Computersystem 102. Beispielsweise kann auf der Ebene des DNS 172 der Domain der URL des Cloud-Computersystems 102 die IP-Adresse des Gateway-Computersystems 100 zugeordnet sein, wohingegen die Zuordnungs-Datei 174 eine Zuordnung der Domain der URL des Cloud-Computersystems 176 zu der IP-Adresse des Gateway-Computersystems 100 beinhaltet. Dies ermöglicht es dem Nutzer 114 von der Vorgabe in dem DNS 172 abzuweichen und ein anderes Cloud-Computersystem 176 zu verwenden, indem eine entsprechende Zuordnung in der Zuordnungs-Datei 174 gespeichert wird.

### Bezugszeichenliste

- 100: Gateway-Computersystem
- 101: Datei
- 102: Cloud-Computersystem
- 104: Schnittstelle
- 106: Netzwerk
- 108: Schnittstelle
- 110: geschützte Verbindung
- 112: Endgerät
- 114: Nutzer
- 116: Speicher
- 118: Authentifizierungsdaten
- 120: Schlüssel
- 122: Mikroprozessor
- 124: Programmmodul
- 126: Programmmodul
- 128: Speicher
- 130: Referenzdaten
- 132: Datei
- 134: Mikroprozessor
- 136: Programmmodul
- 138: Programmmodul
- 140: Betriebssystem
- 142: Schnittstelle
- 144: Nutzer
- 146: Endgerät
- 148: Schnittstelle
- 150: Programmmodul
- 152: Betriebssystem
- 154: Session
- 156: Datei-Verzeichnis
- 158: Replik
- 160: Programm
- 162: Bestätigungssignal
- 164: Programmmodul
- 166: Programmmodul
- 168: E-Mail
- 170: Verbindung
- 172: DNS
- 174: Zuordnungs-Datei
- 176: Cloud-Computersystem

## Patentansprüche

1. Verfahren zum Zugriff auf einen Datenspeicher (128) eines Cloud-Computersystems (102) über ein Gateway-Computersystem (100), wobei das Gateway-Computersystem über ein Netzwerk (106) mit dem Cloud-Computersystem verbunden ist, wobei das Gateway-Computersystem zumindest einen kryptografischen Schlüssel (120) speichert, wobei dem Cloud-Computersystem eine URL zugeordnet ist und wobei dem Gateway-Computersystem eine IP-Adresse zugeordnet ist, wobei ein Domain Name System für die Namensauflösung so ausgebildet ist, dass die in der URL des Cloud-Computersystems beinhaltete Domain in die IP-Adresse des Gateway-Computersystems aufgelöst wird, mit folgenden Schritten:
- Aufbau einer geschützten Verbindung (110) zwischen einem ersten Endgerät (112) des Nutzers und dem Gateway-Computersystem über das Netzwerk durch ein Programm (138) des Endgeräts, wobei hierzu die URL des Cloud-Computersystems in das Programm eingegeben wird und zur Namensauflösung der URL das modifizierte Domain Name System verwendet wird, so dass die geschützte Verbindung anstatt zu dem Cloud-Computersystem zu dem Gateway-Computersystem aufgebaut wird ,
- Übertragung einer Datei (101) von dem Endgerät an das Gateway-Computersystem über die geschützte Verbindung,
- Aufbau einer Session (154) zwischen dem Gateway-Computersystem und dem Cloud-Computersystem über das Netzwerk,
- Verschlüsselung der Datei mithilfe des kryptografischen Schlüssels durch das Gateway-Computersystem,
- Übertragung der verschlüsselten Datei (132) von dem Gateway-Computersystem an das Cloud-Computersystem über die Session,
- Speicherung der verschlüsselten Datei in dem Datenspeicher des Cloud-Computersystems.

2. Verfahren nach Anspruch 1, wobei in einem Betriebssystem (140) des Endgeräts des Nutzers ein DNS (172) festgelegt ist, mit folgenden weiteren Schritten:
- Übertragung einer Anfrage von dem Endgerät an den in dem Betriebssystem festgelegten DNS über das Netzwerk zum Abrufen einer IP-Adresse des Cloud-Computersystems, welche der URL des Cloud-Computersystems zugeordnet ist,
- Antwort des DNS auf die Anforderung durch Übertragung der IP-Adresse des Gateway-Computersystems an das Endgerät,
wobei in dem DNS zur Modifizierung des Domain Name Systems eine Zuordnung der in der URL des Cloud-Computersystems beinhalteten Domain zu der IP-Adresse des Gateway-Computersystems gespeichert ist, wobei der Aufbau der geschützten Verbindung gemäß dem TCP/IP-Protokoll mit der IP-Adresse des Gateway-Computersystems erfolgt.

3. Verfahren nach Anspruch 1 oder 2, wobei in einer Zuordnungs-Datei (174), die auf dem Endgerät gespeichert ist, eine Zuordnung der Domain, die in der URL des Cloud-Computersystems beinhaltet ist, zu der IP-Adresse des Gateway-Computersystems gespeichert sein kann, wobei eine Anforderung des Programms (138) des Endgeräts an einen DNS zur Namensauflösung der URL des Cloud-Computersystems (172) von einem Betriebssystem des Endgeräts verarbeitet wird, indem das Betriebssystem auf die Zuordnungs-Datei zugreift, um zu prüfen, ob in der Zuordnungs-Datei eine Zuordnung für die Domain vorhanden ist, und wenn dies der Fall ist, das Betriebssystem auf die Zuordnungs-Datei zugreift, um die der Domain in der Zuordnungs-Datei zugeordnete IP-Adresse des Gateway-Computersystems zu lesen, so dass das Betriebssytem dem Program auf dessen Anforderung zur Namensauflösung mit der IP-Adresse des Gateway-Computersystems antwortet, und das Program die geschützten Verbindung mit der IP-Adresse des Gateway-Computersystems anstelle der IP-Adresse des Cloud-Computersystems aufbaut, wobei das Betriebssystem so ausgebildet ist, dass für den Fall, dass in der Zuordnungs-Datei keine Zuordnung für die Domain vorhanden ist, die Anforderung zur Namensauflösung an einen DNS weitergeleitet wird.

4. Verfahren nach Anspruch 1, 2 oder 3, wobei das Gateway-Computersystem Authentifizierungsdaten (118) eines Nutzers (114) zur Authentifizierung gegenüber dem Cloud-Computersystem speichert, mit einer Authentifizierung des Nutzers gegenüber dem Cloud-Computersystem durch das Gateway-Computersystem über die Session, indem das Gateway-Computersystem für die Authentifizierung des Nutzers auf die in dem Gateway-Computersystem gespeicherten Authentifizierungsdaten des Nutzers zugreift.

5. Verfahren nach einem der vorhergehenden Ansprüche, wobei das Cloud-Computersystem ein Datei-Verzeichnis (156) für in dem Datenspeicher des Cloud-Computersystems gespeicherte Dateien aufweist und in dem Gateway-Computersystem eine Replik (158) des Datei-Verzeichnisses gespeichert ist, mit folgenden weiteren Schritten:
- Erzeugung einer Webseite zur Wiedergabe der Replik des Datei-Verzeichnisses durch das Gateway-Computersystem,
- Übertragung der Webseite an das Endgerät über die geschützte Verbindung,
- Anzeige der Webseite durch das Endgerät und Eingabe einer Auswahl für einen Dateipfad in der angezeigten Replik des Datei-Verzeichnisses für die Speicherung der Datei,
- Übertragung der Auswahl des Dateipfads von dem Endgerät an das Gateway-Computersystem über die geschützte Verbindung,
- Übertragung eines Speicherkommandos von dem Gateway-Computersystem an das Cloud-Computersystem zur Speicherung der verschlüsselten Datei in dem Datenspeicher gemäß dem ausgewählten Dateipfad,
- Empfang eines Bestätigungssignals (162) des Cloud-Computersystems durch das Gateway-Computersystem, wobei das Bestätigungssignal die erfolgreiche Ausführung des Speicherkommandos signalisiert,
- Aktualisierung der Replik des Datei-Verzeichnisses nach dem Empfang des Bestätigungssignals aufgrund der Speicherung der verschlüsselten Datei in dem Datenspeicher des Cloud-Computersystems.

6. Verfahren nach einem der vorhergehenden Ansprüche, mit folgenden weiteren Schritten:
- Eingabe eines Identifikators eines weiteren Nutzers (146) in das Endgerät durch den Nutzer,
- Übertragung des Identifikators über die geschützte Verbindung von dem Endgerät an das Gateway-Computersystem,
- Spezifizierung eines Zugriffrechts zum Zugriff auf die in dem Datenspeicher des Cloud-Computersystems gespeicherte Datei für den weiteren Nutzer durch den Nutzer über die geschützte Verbindung,
- Speicherung der Spezifizierung des Zugriffsrechts und des zugeordneten Identifikators des Nutzers durch das Gateway-Computersystem,
- Erzeugung einer Nachricht für den weiteren Nutzer durch das Gateway-Computersystem,
- Übertragung der Nachricht von dem Gateway-Computersystem an ein Endgerät des weiteren Nutzers mithilfe des Identifikators,
- aufgrund des Empfangs einer Antwort auf die Nachricht durch das Gateway-Computersystem:
a) Aufbau einer geschützten Verbindung zwischen dem Gateway-Computersystem und dem Endgerät des weiteren Nutzers,
b) Aufbau einer Session für den weiteren Nutzer zwischen dem Gateway-Computersystem und dem Cloud-Computersystem über das Netzwerk,
c) Authentifizierung des Nutzers gegenüber dem Cloud-Computersystem durch das Gateway-Computersystem über die Session, indem das Gateway-Computersystem für die Authentifizierung des Nutzers auf die in dem Gateway-Computersystem gespeicherten Authentifizierungsdaten des Nutzers zugreift,
d) Übertragung der verschlüsselten Datei von dem Cloud-Computersystem an das Gateway-Computersystem über die Session,
e) Entschlüsselung der Datei mithilfe des kryptografischen Schlüssels des Nutzers durch das Gateway-Computersystem,
f) Übertragung der entschlüsselten Datei von dem Gateway-Computersystem an das Endgerät des weiteren Nutzers über die in Schritt a) aufgebaute geschützte Verbindung.

7. Verfahren nach Anspruch 6, wobei der Nutzer einen Dateipfad zur Auswahl der Datei in das Endgerät eingibt, diese Auswahl über die geschützte Verbindung an das Gateway-Computersystem übertragen wird, und sich die Spezifizierung des Zugriffsrechts auf die so ausgewählte Datei bezieht.

8. Verfahren nach einem der vorhergehenden Ansprüche, wobei es sich bei der geschützten Verbindung um ein Virtual Private Network handelt, welches über das Netzwerk aufgebaut wird.

9. Verfahren nach einem der vorhergehenden Ansprüche, wobei der kryptographische Schlüssel (120), mit dem die Datei verschlüsselt wird, dem Nutzer zugeordnet ist.

10. Verfahren nach einem der vorhergehenden Ansprüche 6, 7 oder 8, wobei der kryptographische Schlüssel (120), mit dem die Datei verschlüsselt wird, ein dateispezifischer symmetrischer Schlüssel ist, wobei dem Nutzer (114) und dem weiteren Nutzer (146) jeweils ein asymmetrisches kryptographsiches Schlüsselpaar mit einem öffentlichen und einem privaten Schlüssel zugeordnet sind, und der dateispezifische symmetrische Schlüssel von dem Gateway-Computersystem mit Hilfe des öffentlichen Schlüssels des Nutzer verschlüsselt wird, um das sich daraus ergebende erste Chiffrat über die erste Session an das Cloud-Computersystem zu übertragen, so dass das erste Chiffrat der verschlüsselten Datei zugeordnet ist und das erste Chiffrat in dem Datenspeicher des Cloud-Computersystems gespeichert wird, wobei der dateispezifische symmetrische Schlüssel nach der Verschlüsselung der Datei von dem Gateway-Computersystem gelöscht wird, wobei die Spezifizierung des Zugriffsrechts zum Zugriff auf die in dem Datenspeicher Cloud-Computersystems gespeicherte Datei für den weiteren Nutzer folgende Schritte beinhaltet:
- Lesen des ersten Chiffrats durch das Gateway-Computersystem von dem Cloud-Computersystem,
- Entschlüsselung des ersten Chiffrats mithilfe des privaten Schlüssels des Nutzers, der das Zugriffsrecht dem weiteren Nutzer einräumen möchte, um so den dateispezifischen symmetrischen Schlüssel zu erhalten, mit dem die Datei verschlüsselt worden ist,
- Verschlüsselung des dateispezifischen symmetrischen Schlüssels mithilfe des öffentlichen Schlüssels des weiteren Nutzers durch das Gateway-Computersystem, woraus sich ein zweites Chiffrat ergibt,
- Übertragung des zweiten Chiffrats von dem Gateway-Computersystem an das Cloud-Computersystem, sodass das zweite Chiffrat der verschlüsselten Datei zugeordnet ist und das zweite Chiffrat in dem Datenspeicher des Cloud-Computersystems gespeichert wird.

11. Verfahren nach einem der vorhergehenden Ansprüche, wobei die sichere Verbindung über eine Mobilfunkverbindung durch einen APN aufgebaut wird, wobei der APN die sichere Verbindung aufgrund der Eingabe der URL des Cloud-Computersystems mit dem Gateway-Computersystem aufbaut.

12. Computersystem mit einem Gateway-Computersystem (100) und einem Cloud-Computersystem (102), wobei das Gateway-Computersystem über ein Netzwerk (106) mit dem Cloud-Computersystem verbunden ist, wobei das Gateway-Computersystem Authentifizierungsdaten registrierter Nutzer (114) zur Authentifizierung gegenüber dem Cloud-Computersystem speichert sowie zumindest je einen kryptografischen Schlüssel (120) für jeden der registrierten Nutzer, wobei dem Cloud-Computersystem eine URL zugeordnet ist und wobei dem Gateway-Computersystem eine IP-Adresse zugeordnet ist, wobei das Domain Name System so ausgebildet ist, dass die in der URL des Cloud-Computersystems beinhaltete Domain in die IP-Adresse des Gateway-Computersystems aufgelöst wird, wobei das Gateway-Computersystem und das Cloud-Computersystem zur Durchführung der folgenden Schritte ausgebildet sind:
- Aufbau einer geschützten Verbindung (110) zwischen einem ersten Endgerät (112) des Nutzers und dem Gateway-Computersystem über das Netzwerk durch ein Programm (138) des Endgeräts, wobei hierzu die URL des Cloud-Computersystems in das Programm eingegeben wird und zur Namensauflösung der URL das modifizierte Domain Name System verwendet wird, so dass die geschützte Verbindung anstatt zu dem Cloud-Computersystem zu dem Gateway-Computersystem aufgebaut wird ,
- Übertragung einer Datei (101) von dem Endgerät an das Gateway-Computersystem über die geschützte Verbindung,
- Aufbau einer Session (154) zwischen dem Gateway-Computersystem und dem Cloud-Computersystem über das Netzwerk,
- Verschlüsselung der Datei mithilfe des kryptografischen Schlüssels durch das Gateway-Computersystem,
- Übertragung der verschlüsselten Datei (132) von dem Gateway-Computersystem an das Cloud-Computersystem über die Session,
- Speicherung der verschlüsselten Datei in dem Datenspeicher des Cloud-Computersystems.

## Claims

1. A method for accessing a data memory (128) of a cloud computer system (102) via a gateway computer system (100), wherein the gateway computer system is connected to the cloud computer system over a network (106), wherein the gateway computer system stores at least one cryptographic key (120), wherein the cloud computer system is associated with a URL, and wherein the gateway computer system is associated with an IP address, wherein a domain name system for the name resolution is configured such that the domain contained in the URL of the cloud computer system is resolved in the IP address of the gateway computer system, the method having the following steps:
- establishing a protected connection (110) between a first terminal device (112) of the user and the gateway computer system over the network by a program (138) of the terminal device, wherein to this end the URL of the cloud computer system is input into the program and the modified domain name system is used for name resolution of the URL, such that the protected connection is established to the gateway computer system instead of to the cloud computer system,
- transmitting a file (101) from the terminal device to the gateway computer system over the protected connection,
- establishing a session (154) between the gateway computer system and the cloud computer system over the network,
- encryption of the file with the aid of the cryptographic key by the gateway computer system,
- transmitting the encrypted file (132) from the gateway computer system to the cloud computer system over the session,
- storing the encrypted file in the data memory of the cloud computer system.

2. The method according to claim 1, wherein a DNS (172) is defined in an operating system (140) of the terminal device of the user, the method having the following further steps:
- transmitting a request from the terminal device to the DNS defined in the operating system over the network to call up an IP address of the cloud computer system which is associated with the URL of the cloud computer system,
- issuing of a response, by the DNS, to the request by transmission of the IP address of the gateway computer system to the terminal device,
wherein an association of the domain contained in the URL of the cloud computer system to the IP address of the gateway computer system is stored in the DNS for modification of the domain name system, wherein the protected connection is established in accordance with the TCP/IP protocol with the IP address of the gateway computer system.

3. The method according to claim 1 or 2, wherein an association of the domain that is contained in the URL of the cloud computer system to the IP address of the gateway computer system may be stored in an association file (174) stored on the terminal device, wherein a request of the program (138) of the terminal device to a DNS for name resolution of the URL of the cloud computer system (172) is processed by an operating system of the terminal device in that the operating system accesses the association file in order to check whether an association for the domain is present in the association file, and, if so, the operating system accesses the association file in order to read the IP address of the gateway computer system associated with the domain in the association file, such that the operating system answers the request of the program for name resolution with the IP address of the gateway computer system, and the program establishes the protected connection to the IP address of the gateway computer system instead of the IP address of the cloud computer system, wherein the operating system is configured such that, if there is no association for the domain provided in the association file, the request for name resolution is forwarded to a DNS.

4. The method according to claim 1, 2 or 3, wherein the gateway computer system stores authentication data (118) of a user (114) for authentication to the cloud computer system, with an authentication of the user to the cloud computer system by the gateway computer system over the session in that the gateway computer system, for the authentication of the user, accesses the authentication data of the user stored in the gateway computer system.

5. The method according to any one of the preceding claims, wherein the cloud computer system has a file directory (156) for the files stored in the data memory of the cloud computer system and a replica (158) of the file directory is stored in the gateway computer system, the method having the following further steps:
- production, by the gateway computer system, of a web page for displaying the replica of the file directory,
- transmitting the web page to the terminal device over the protected connection,
- display, by the terminal device, of the web page and input of a selection for a file path in the displayed replica of the file directory for storage of the file,
- transmitting the selection of the file path from the terminal device to the gateway computer system over the protected connection,
- transmitting a storage command from the gateway computer system to the cloud computer system to store the encrypted file in the data memory in accordance with the selected file path,
- receipt, by the gateway computer system, of an acknowledgment signal (162) of the cloud computer system, wherein the acknowledgment signal signals successful execution of the storage command, and
- updating the replica of the file directory following the receipt of the acknowledgment signal on account of the storage of the encrypted file in the data memory of the cloud computer system.

6. The method according to any one of the preceding claims, with the following further steps:
- inputting an identifier of a further user (146) into the terminal device by the user,
- transmitting the identifier from the terminal device to the gateway computer system over the protected connection,
- specification, by the user, of an access right for access to the file stored in the data memory of the cloud computer system for the further user over the protected connection,
- storage of the specification of the access right and the associated identifier of the user by the gateway computer system,
- generation of a message for the further user by the gateway computer system,
- transmitting the message from the gateway computer system to a terminal device of the further user with the aid of the identifier,
- on account of the receipt of a response to the message by the gateway computer system:
a) establishing a protected connection between the gateway computer system and the terminal device of the further user,
b) establishing a session for the further user between the gateway computer system and the cloud computer system over the network,
c) authentication of the user to the cloud computer system by the gateway computer system over the session in that the gateway computer system, for the authentication of the user, accesses the authentication data of the user stored in the gateway computer system,
d) transmitting the encrypted file from the cloud computer system to the gateway computer system over the session,
e) encryption of the file by the gateway computer system with the aid of the cryptographic key of the user,
f) transmitting the encrypted file from the gateway computer system to the terminal device of the further user over the protected connection established in step a).

7. The method according to claim 6, wherein the user inputs a file path for selection of the file into the terminal device, this selection is transmitted over the protected connection to the gateway computer system, and the specification of the access right is based on the file thus selected.

8. The method according to any one of the preceding claims, wherein the protected connection is a virtual private network which is established over the network.

9. The method according to any one of the preceding claims, wherein the cryptographic key (120) with which the file is encrypted is associated with the user.

10. The method according to any one of claims 6, 7 or 8, wherein the cryptographic key (120) with which the file is encrypted is a file-specific symmetric key, wherein an asymmetric cryptographic key pair comprising a public key and a private key is associated with each of the user (114) and the further user (146), and the file-specific symmetric key is encrypted by the gateway computer system with the aid of the public key of the user so as to transmit the resultant first cipher over the first session to the cloud computer system, such that the first cipher is associated with the encrypted file and the first cipher is stored in the data memory of the cloud computer system, wherein the file-specific symmetric key is deleted from the gateway computer system after the encryption of the file, wherein the specification of the access right for access to the file stored in the data memory cloud computer system for the further user includes the following steps:
- reading of the first cipher by the gateway computer system from the cloud computer system,
- decryption of the first cipher with the aid of the private key of the user wishing to grant the further user the access right, so as to thus obtain the file-specific symmetric key with which the file has been encrypted,
- encryption of the file-specific symmetric key with the aid of the public key of the further user by the gateway computer system, thus resulting in a second cipher,
- transmission of the second cipher from the gateway computer system to the cloud computer system so that the second cipher is associated with the encrypted file and the second cipher is stored in the file memory of the cloud computer system.

11. The method according to any one of the preceding claims, wherein the secure connection is established via a mobile communications connection by an APN, wherein the APN establishes the secure connection to the gateway computer system on account of the input of the URL of the cloud computer system.

12. A computer system comprising a gateway computer system (100) and a cloud computer system (102), wherein the gateway computer system is connected over a network (106) to the cloud computer system, wherein the gateway computer system stores authentication data of registered users (114) for authentication to the cloud computer system and at least one cryptographic key (120) for each of the registered users, wherein a URL is associated with the gateway computer system, wherein the domain name system is configured such that the domain contained in the URL of the cloud computer system is resolved in the IP address of the gateway computer system, wherein the gateway computer system and the cloud computer system are configured to carry out the following steps:
- establishing a protected connection (110) between a first terminal device (112) of the user and the gateway computer system over the network by a program (138) of the terminal device, wherein to this end the URL of the cloud computer system is input into the program and the modified domain name system is used for name resolution of the URL, such that the protected connection is established to the gateway computer system instead of to the cloud computer system,
- transmitting a file (101) from the terminal device to the gateway computer system over the protected connection,
- establishing a session (154) between the gateway computer system and the cloud computer system over the network,
- encryption of the file with the aid of the cryptographic key by the gateway computer system,
- transmitting the encrypted file (132) from the gateway computer system to the cloud computer system over the session,
- storing the encrypted file in the data memory of the cloud computer system.

## Revendications

1. Procédé d'accès à une mémoire de données (128) d'un système informatique en nuage (102) par le biais d'un système informatique formant passerelle (100), où le système informatique formant passerelle est relié avec le système informatique en nuage par le biais d'un réseau (106), où le système informatique formant passerelle stocke au moins une clé cryptographique (120), où le système informatique en nuage est associé à un URL et où une adresse IP est associée au système informatique formant passerelle, où un système de nom de domaine est conçu pour la dissolution du nom de telle manière que le domaine contenu dans l'URL du système informatique en nuage se dissolve dans l'adresse IP du système informatique formant passerelle, avec les étapes suivantes :
- l'établissement d'une liaison sécurisée (110) entre un premier appareil terminal (112) de l'utilisateur et du système informatique formant passerelle par le biais du réseau par un programme (138) de l'appareil terminal, où, pour ce faire, l'URL du système informatique en nuage est entré dans le programme et le système de nom de domaine modifié est employé pour la dissolution du nom de l'URL de sorte que la liaison sécurisée est établie vers le système informatique formant passerelle au lieu du système informatique en nuage,
- la transmission d'une donnée (101) de l'appareil terminal au système informatique formant passerelle par le biais de la liaison sécurisée,
- l'établissement d'une session (154) entre le système informatique formant passerelle et le système informatique en nuage par le biais du réseau,
- le cryptage de la donnée à l'aide de la clé cryptographique par le système informatique formant passerelle,
- la transmission de la donnée cryptée (132) du système informatique formant passerelle au système informatique en nuage par le biais de la session,
- le stockage de la donnée cryptée dans la mémoire de données du système informatique en nuage.

2. Procédé selon la revendication 1, dans lequel un DNS (172) est établi dans un système d'exploitation (140) de l'appareil terminal de l'utilisateur, avec les nouvelles étapes suivantes :
- la transmission d'une demande de l'appareil terminal au DNS établi dans le système d'exploitation par le biais du réseau pour la consultation d'une adresse IP du système informatique en nuage, laquelle est associée à l'URL du système informatique en nuage,
- la réponse du DNS à la demande par une transmission de l'adresse IP du système informatique formant passerelle à l'appareil terminal,
où un attribut du domaine contenu dans l'URL du système informatique en nuage est stocké avec l'adresse IP du système informatique formant passerelle dans le DNS pour la modification du système de nom de domaine, où l'établissement de la liaison sécurisée a lieu selon le protocole TCP/IP avec l'adresse IP du système informatique formant passerelle.

3. Procédé selon la revendication 1 ou la revendication 2, dans lequel un attribut du domaine, qui est contenu dans l'URL du système informatique en nuage, peut être stocké conjointement avec l'adresse IP du système informatique formant passerelle dans une donnée d'attribut (174) qui est stockée sur l'appareil terminal, où une demande du programme (138) de l'appareil terminal est exécutée sur un DNS pour la dissolution du nom de l'URL du système informatique en nuage (172) par un système d'exploitation de l'appareil terminal en ce que le système d'exploitation accède à la donnée d'attribut afin de vérifier si un attribut pour le domaine est présent dans la donnée d'attribut, et, si c'est le cas, le système d'exploitation accède à la donnée d'attribut afin de lire l'adresse IP du système informatique formant passerelle associée au domaine dans la donnée d'attribut, de sorte que le système d'exploitation répond au programme, suite à sa demande de dissolution de nom, avec l'adresse IP du système informatique formant passerelle, et le programme établit la liaison sécurisée avec l'adresse IP du système informatique formant passerelle à la place de l'adresse IP du système informatique en nuage, où le système d'exploitation est conçu de telle manière que, dans le cas où aucun attribut pour le domaine n'est présent dans la donnée d'attribut, la demande de dissolution du nom est transmise plus loin à un DNS.

4. Procédé selon la revendication 1, la revendication 2 ou la revendication 3, dans lequel le système informatique formant passerelle stocke des données d'authentification (118) d'un utilisateur (114) pour l'authentification vis-à-vis du système informatique en nuage, avec une authentification de l'utilisateur vis-à-vis du système informatique en nuage par le système informatique formant passerelle par le biais de la session en ce que le système informatique formant passerelle accède aux données d'authentification de l'utilisateur stockées dans le système informatique formant passerelle pour l'authentification de l'utilisateur.

5. Procédé selon l'une des revendications précédentes, dans lequel le système informatique en nuage présente un annuaire de données (156) pour des données stockées dans la mémoire de données du système informatique en nuage et un duplicata (158) de l'annuaire de données est stocké dans le système informatique formant passerelle, avec les nouvelles étapes suivantes :
- la création d'une page web pour la reproduction du duplicata de l'annuaire de données par le système informatique formant passerelle,
- la transmission de la page web à l'appareil terminal par la liaison sécurisée,
- l'indication de la page web par l'appareil terminal et l'entrée d'une sélection pour un chemin de donnée dans le duplicata désigné de l'annuaire de données pour le stockage de la donnée,
- la transmission de la sélection du chemin de donnée de l'appareil terminal au système informatique formant passerelle par le biais de la liaison sécurisée,
- la transmission d'une commande de stockage du système informatique formant passerelle au système informatique en nuage pour le stockage de la donnée cryptée dans la mémoire de données selon le chemin de donnée sélectionné,
- la réception d'un signal de confirmation (162) du système informatique en nuage par le système informatique formant passerelle, où le signal de confirmation signale l'exécution réussie de la commande de stockage,
- l'actualisation du duplicata de l'annuaire de données après la réception du signal de confirmation suite au stockage de la donnée cryptée dans la mémoire de données du système informatique en nuage.

6. Procédé selon l'une des revendications précédentes, avec les nouvelles étapes suivantes :
- l'entrée d'un identificateur d'un nouvel utilisateur (146) dans l'appareil terminal par l'utilisateur,
- la transmission de l'identificateur de l'appareil terminal au système informatique formant passerelle par le biais de la liaison sécurisée,
- la spécification d'un droit d'accès pour l'accès aux données stockées dans la mémoire de données du système informatique en nuage pour le nouvel utilisateur par l'utilisateur par le biais de la liaison sécurisée,
- le stockage de la spécification du droit d'accès et de l'identificateur associé de l'utilisateur par le système informatique formant passerelle,
- la création d'un message pour le nouvel utilisateur par le système informatique formant passerelle,
- la transmission du message du système informatique formant passerelle à un appareil terminal du nouvel utilisateur à l'aide de l'identificateur,
- suite à la réception de la réponse au message par le système informatique formant passerelle :
a) l'établissement d'une liaison sécurisée entre le système informatique formant passerelle et l'appareil terminal du nouvel utilisateur,
b) l'établissement d'une session pour le nouvel utilisateur entre le système informatique formant passerelle et le système informatique en nuage par le biais du réseau,
c) l'authentification de l'utilisateur vis-à-vis du système informatique en nuage par le système informatique formant passerelle par le biais de la session, en ce que le système informatique formant passerelle accède aux données d'authentification de l'utilisateur pour l'authentification de l'utilisateur,
d) la transmission de la donnée cryptée du système informatique en nuage au système informatique formant passerelle par le bais de la session,
e) le décryptage de la donnée à l'aide de la clé cryptographique de l'utilisateur par le système informatique formant passerelle,
f) la transmission de la donnée décryptée du système informatique formant passerelle à l'appareil terminal du nouvel utilisateur par le biais de la liaison sécurisée établie dans l'étape a).

7. Procédé selon la revendication 6, dans lequel l'utilisateur entre dans l'appareil terminal un chemin de donnée pour la sélection de la donnée, cette sélection est transmise au système informatique formant passerelle par le biais de la liaison sécurisée, et concerne la spécification du droit d'accès à la donnée ainsi choisie.

8. Procédé selon l'une des revendications précédentes, dans lequel, dans le cas de la liaison sécurisée, il s'agit d'un réseau privé virtuel, lequel est établi par le biais du réseau.

9. Procédé selon l'une des revendications précédentes, dans lequel la clé cryptographique (120) avec laquelle la donnée est cryptée, est associée à l'utilisateur.

10. Procédé selon l'une des revendications précédentes 6, 7 ou 8, dans lequel la clé cryptographique (120), avec laquelle la donnée est encryptée, est une clé symétrique spécifique à la donnée, où une paire de clés cryptographiques asymétrique avec respectivement une clé publique et une clé privée est associée à l'utilisateur (114) et au nouvel utilisateur (146), et la clé symétrique spécifique à la donnée est encryptée par le système informatique formant passerelle à l'aide de la clé publique de l'utilisateur afin de transmettre le premier élément chiffré en résultant au système informatique en nuage par le biais de la première session, de sorte que le premier élément chiffré est associé à la donnée encryptée et le premier élément chiffré est stocké dans la mémoire de données du système informatique en nuage, où la clé symétrique spécifique à la donnée est effacée après l'encryptage de la donnée par le système informatique formant passerelle, où la spécification du droit d'accès pour le nouvel utilisateur à la donnée stockée dans la mémoire de données du système informatique en nuage comprend les étapes suivantes :
- la lecture du premier élément chiffré par le système informatique formant passerelle à partir du système informatique en nuage,
- le décryptage du premier élément chiffré à l'aide de la clé privée de l'utilisateur qui souhaite aménager le droit d'accès du nouvel utilisateur afin d'obtenir ainsi la clé symétrique spécifique à la donnée avec laquelle la donnée a été encryptée,
- l'encryptage de la clé symétrique spécifique à la donnée à l'aide de la clé publique du nouvel utilisateur par le système informatique formant passerelle, d'où il y a création d'un deuxième élément chiffré,
- la transmission du deuxième élément chiffré du système informatique formant passerelle au système informatique en nuage de sorte que le deuxième élément chiffré est associé à la donnée encryptée et le deuxième élément chiffré est stocké dans la mémoire de donnée du système informatique en nuage.

11. Procédé selon l'une des revendications précédentes, dans lequel la liaison sécurisée est établie par un nom de point d'accès APN par le biais d'une liaison radio mobile, où l'APN établit avec le système informatique formant passerelle la liaison sécurisée suite à l'entrée de l'URL du système informatique en nuage.

12. Système informatique doté d'un système informatique formant passerelle (100) et d'un système informatique en nuage (102), où le système informatique formant passerelle est relié avec le système informatique en nuage par le biais d'un réseau (106), où le système informatique formant passerelle stocke des données d'authentification d'utilisateurs (114) enregistrés pour l'authentification vis-à-vis du système informatique en nuage ainsi qu'au moins chaque fois une clé cryptographique (120) pour chacun des utilisateurs enregistrés, où un URL est associé au système informatique en nuage et où une adresse IP est associée au système informatique formant passerelle, où le système de nom de domaine est conçu de telle manière que le domaine contenu dans l'URL du système informatique en nuage est dissout dans l'adresse IP du système informatique formant passerelle, où le système informatique format passerelle et le système informatique en nuage sont conçus pour l'exécution des étapes suivantes :
- l'établissement d'une liaison sécurisée (110) entre un premier appareil terminal (112) de l'utilisateur et le système informatique formant passerelle par le biais du réseau par un programme (138) de l'appareil terminal, où, pour ce faire, l'URL du système informatique en nuage est entré dans le programme et le système de nom de domaine modifié est employé pour la dissolution du nom de l'URL de sorte que la liaison sécurisée est établie vers le système informatique formant passerelle au lieu du système informatique en nuage,
- la transmission d'une donnée (101) de l'appareil terminal au système informatique formant passerelle par le biais de la liaison sécurisée,
- l'établissement d'une session (154) entre le système informatique formant passerelle et le système informatique en nuage par le biais du réseau,
- le cryptage de la donnée à l'aide de la clé cryptographique par le système informatique formant passerelle,
- la transmission de la donnée cryptée (132) du système informatique formant passerelle au système informatique en nuage par le biais de la session,
- le stockage de la donnée cryptée dans la mémoire de données du système informatique en nuage.
